# EUROPÄISCHE PATENTANMELDUNG

(11) **EP 4 559 889 A1**
(43) Veröffentlichungstag der Anmeldung: **28.05.2025**
(21) Anmeldenummer: 23211770.5
(22) Anmeldetag: 23.11.2023
(51) Int. Cl.: C05D 1/00, C05D 1/02, C05D 9/02, C05F 11/02, C05G 3/60, C05G 3/80, C05G 5/10, C05G 5/20

(54) **ALKALIHUMAT- UND/ODER AMMONIUMHUMATHALTIGE ZUSAMMENSETZUNGEN AUS NACHWACHSENDEN ROHSTOFFEN MIT HOHER WASSERSPEICHERKAPAZITÄT UND WUCHSSTOFFWIRKUNG**

(71) Anmelder: Terra Optima AG, 6340 Baar (CH)
(72) Erfinder: Bogner, Markus, 6361 Hopfgarten (AT); Knauseder, Franz, 6322 Kirchbichl (AT); Naschberger, Stefan, 6311 Wildschönau (AT)
(74) Vertreter: Patentanwaltskanzlei Matschnig & Forsthuber OG

(57) **Zusammenfassung**

Die Erfindung betrifft ein Verfahren zur Herstellung einer Alkalihumat- und/ oder Ammoniumhumat-haltigen Zusammensetzung, wobei in dem Verfahren eine Reaktionsmasse umfassend (i) eine Huminsäure-haltige Zusammensetzung, die mittels hydrothermaler Karbonisierung (HTC) aus nachwachsenden cellulose- und hemicellulosehaltigen Rohmaterialien synthetisiert worden ist, (ii) Wasser, (iii) KOH, NaOH, und/oder NH₄OH, und (vi) zumindest ein Alkali- und/oder Ammoniumsalz der Chlorwasserstoffsäure, bereitgestellt wird, und wobei in dem Verfahren die in der Huminsäure-haltigen Zusammensetzung enthaltenen Huminsäuren in der Reaktionsmasse zu Alkalihumaten -und/oder Ammoniumhumaten umgesetzt werden, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt.

## Beschreibung

### Technisches Gebiet

Die Erfindung betrifft Verfahren zur Herstellung einer Alkalihumat- und/oder Ammoniumhumat-haltigen Zusammensetzung aus nachwachsenden Rohstoffen, die vorteilhaft auf dem Gebiet der Landwirtschaft eingesetzt werden kann. Die Erfindung betrifft ferner Flüssig- und Trockenprodukte, die mit den hierin beschriebenen erfindungsgemäßen Verfahren gewonnen werden sowie Pflanzen-Biostimulanzien, Bodenhilfsstoffe und Düngemittel, welche die Flüssig- und Trockenprodukte gemäß der Erfindung enthalten. Die Erfindung betrifft ferner Verwendungen der erfindungsgemäßen Flüssig- und Trockenprodukte für landwirtschaftliche Anwendungen.

### Technischer Hintergrund

Huminstoffe sind hochmolekulare organische Verbindungen mit komplexer Makromolekülstruktur, die aus pflanzlichen Abbauprodukten entstehen und in allen Böden und Gewässern zu finden sind. Aufgrund ihrer heterogenen Zusammensetzung besitzt die Substanzklasse der Huminstoffe keine einheitliche Strukturformel, lässt sich aber mittels alkalischer Extraktion in die Fraktionen Huminsäure, Fulvinsäure und Humine einteilen. Huminsäure besteht ebenfalls aus einer komplexen heterogenen Mischung aus hochmolekularen Verbindungen. Die Salze der Huminsäure werden als Humate bezeichnet. Die Huminsäure (hierin synonym auch als "Huminsäuren" bezeichnet) bildet als Hauptfraktion das biologische Zentrum des Humus. Fruchtbare Erde enthält ca. 3%, Torf etwa 3-10 % an Huminsäuren.

In bestimmten Schichten der Weichbraunkohle, die als Leonardit bezeichnet werden, findet man Huminsäuren in einer Konzentration über 50 %. Seit der Entdeckung der hohen Konzentrationen an Huminsäuren in Leonardit ist dieser das wichtigste Ausgangsprodukt für die kommerzielle Produktion von Huminsäuren bzw. huminsäurebasierten Produkten für die Landwirtschaft und andere Bereiche geworden.

Aus aktuellen wissenschaftlichen Studien geht hervor, dass die Fruchtbarkeit des Bodens sehr stark vom Huminsäuregehalt des Bodens bestimmt wird. Ihre hohe Kationenaustauschkapazität und Mineralrückhaltefunktion, ihre Verbesserung der Nährstoffaufnahme der Pflanzen sowie die gute Wasserspeicherkapazität machen die Huminsäure bzw. huminsäurebasierten Produkte zu einem wertvollen Werkzeug zur Verbesserung der Bodenfruchtbarkeit und des Pflanzenwachstums, als biologische Mittel für gewerbliche und wissenschaftliche Zwecke und Labors, als Bodenverbesserungsmittel für Landwirtschaft und Gartenbau, als Düngemittel, als Nährmittel für Pflanzen sowie als Saatgutpräservierungsmittel.

Der stetig steigende Bedarf an Huminsäuren wird heute zum überwiegenden Teil durch den Abbau und die Extraktion von Leonardit gedeckt. Huminsäuren aus diesem fossilen Vorprodukt haben jedoch aufgrund des sehr kostspieligen, aufwändigen und umweltbelastenden Extraktionsverfahrens und der erforderlichen Sondermüllentsorgung umweltschädlicher Verfahrensreststoffe, ökologische und ökonomische Nachteile gegenüber Huminsäuren aus nachwachsenden Rohstoffen, die insbesondere nach dem Verfahren der hydrothermalen Karbonisierung (im Folgenden kurz: HTC-Verfahren) hergestellt sind.

Das HTC-Verfahren stellt ein etabliertes Verfahren zur Herstellung von Huminstoff- bzw. Huminsäure-haltigen Produkten aus Biomasse wie beispielsweise land- und holzwirtschaftliche Abfälle, Klärschlamm und dergleichen dar und ist in der Fachwelt hinlänglich bekannt. Beim HTC-Verfahren wird feuchte Biomasse unter Sauerstoffausschluss und Eigendampfdruck hydrothermal behandelt. Das HTC-Verfahren ist ein vergleichsweise mildes verfahrenstechnisches Verfahren, das die natürliche Humifizierung simuliert, jedoch durch die deutlich erhöhte Temperatur auf Reaktionszeiten von nur wenigen Minuten bis zu einigen Stunden beschleunigt wird. Zudem erzielt das HTC-Verfahren als chemischer Prozess in der Regel hervorragende Kohlenstoffausbeuten und eine Metabolisierung wird vermieden, d. h. der Großteil des in der Biomasse gebundenen Kohlenstoffs findet sich in dem mittels HTC-Verfahren hergestellten humifizierten Produkt wieder. Mittels des HTC-Verfahrens hergestellte Huminsäure-haltige Zusammensetzungen sind im Handel erhältlich (z.B. HUMIVERSE^{®} von Terra Optima, Schweiz).

Im Stand der Technik wurde das HTC-Verfahren beispielsweise in DE 102007062808, DE 102007062809, DE 102007062810, DE 102007062811, DE 102007056170, DE 102008058444, EP 2 716 619 A2 und WO 2019052738A1 beschrieben. In diesen Schriften wird die hydrothermale Karbonisierung verschiedener Arten von Biomasse unter unterschiedlichen Reaktionsbedingungen und in verschiedenen Verfahren erläutert.

Die wichtigste Handelsform der Huminsäuren ist ihr Kaliumsalz, das in gängiger Weise durch Umsetzen der Huminsäuren mit Kaliumhydroxid gewonnen wird. Diese Kaliumhumate sind gut wasserlöslich und werden in der Landwirtschaft in fester und flüssiger Form eingesetzt. Es ist bekannt, dass Kaliumhumate sensibel auf thermische Belastungen reagieren, wie beispielsweise auf einen thermischen Trocknungsvorgang flüssiger Produkte zum Erhalt eines Trockenprodukts oder auf einen Transport bzw. eine Lagerung bei erhöhten Temperaturen, so dass es infolge von thermischen Belastungen zu Verlusten in der Wirksamkeit der Humate kommt. Eine gute thermische Stabilität verbunden mit einer zufriedenstellenden Wasserspeicherkapazität (hierin auch als Wasserspeicherkapazität bezeichnet) sowie Wasserretention ist von großer und zunehmender wirtschaftlicher Bedeutung im Bereich der Landwirtschaft. Angesichts der globalen Erwärmung und der dadurch verursachten Zunahme an Extremwetterereignissen wie Trockenheit und Starkregen und der beständig wachsenden Dürrezonen, kann eine lange Wasserretention kurze bis mittlere Dürreperioden kompensieren und die Wasserspeicherkapazität kann dazu beitragen, die Böden klimafit zu machen und an die veränderten Klimabedingungen anzupassen. Im Normalfall und nach derzeit gängiger Praxis liegt die aufzubringende Minimalmenge an einem Huminsäure- bzw. Humat-haltigen Produkt für jeden Bodentyp bei ca. 3t/ha, um eine zufriedenstellende Bodenfitness zu erreichen. Es besteht folglich ein großer Bedarf nach Humat-haltigen Zusammensetzungen, die eine verbesserte thermische Stabilität sowie eine zufriedenstellende Wasserspeicherkapazität sowie Wasserretention aufweisen und damit zur Werterhöhung des Bodens, zur Erschließung und Vitalisierung arider Böden, und Gesunderhaltung von landwirtschaftlich kultivierten Pflanzen beitragen.

Es ist daher eine Aufgabe der vorliegenden Erfindung Verfahren zur Herstellung einer Alkalihumat- und/oder Ammoniumhumat-haltigen Zusammensetzung bereitzustellen, wobei die mit diesen Verfahren erhaltene Alkalihumat- und/oder Ammoniumhumat-haltige Zusammensetzung eine ausgezeichnete thermische Stabilität sowie eine hervorragende Wasserretention und gute Wasserspeicherleistung und zudem einen im Vergleich zu bekannten, aus Leonardit gewonnenen Marktprodukten den höchsten Biomassenertrag aufweist. Es ist weiters eine Aufgabe der Erfindung, Flüssig- und Trockenprodukte, die mit diesen Verfahren gewonnen werden, sowie Pflanzen-Biostimulanzien, Bodenhilfsstoffe und Düngemittel, welche die Flüssig- und Trockenprodukte gemäß der Erfindung enthalten, bereitzustellen.

### Beschreibung der Erfindung

Diese Aufgabe wird mit einer ersten Variante des erfindungsgemäßen Verfahrens zur Herstellung einer Alkalihumat- und/oder Ammoniumhumat-haltigen Zusammensetzung gelöst, welches dadurch gekennzeichnet ist, dass eine Reaktionsmasse umfassend:
(i) eine Huminsäure-haltige Zusammensetzung, die mittels hydrothermaler Karbonisierung (HTC) aus nachwachsenden cellulose- und hemicellulosehaltigen Rohmaterialien synthetisiert worden ist,
(ii) Wasser,
(iii) KOH, NaOH, und/oder NH₄OH
(vi) zumindest ein Alkali- und/oder Ammoniumsalz der Chlorwasserstoffsäure

bereitgestellt wird, wobei zum Erhalt eines Flüssigprodukts der Alkalihumat- und/oder Ammoniumhumat-haltigen Zusammensetzung die in der Huminsäure-haltigen Zusammensetzung enthaltenen Huminsäuren in der Reaktionsmasse zu Alkalihumaten - und/oder Ammoniumhumaten umgesetzt werden, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt, und
wobei optional zum Erhalt eines Trockenprodukts der Alkalihumat- und/oder Ammoniumhumat-haltigen Zusammensetzung das erhaltene Flüssigprodukt der Alkalihumat- und/oder Ammoniumhumat-haltigen Zusammensetzung einem Trocknungsschritt unterworfen wird.

Im Zuge der Entwicklung des erfindungsgemäßen Verfahrens wurde in zufälliger Weise der überraschende Sachverhalt festgestellt, dass ein Zusatz von Chlorid in der hierin definierten Konzentration bei der Herstellung von Alkalihumat- und/oder Ammoniumhumat-haltigen Zusammensetzungen eine thermische Instabilität des Alkali- und/oder Ammoniumhumats kompensiert und die Wasserspeicherleistung und Wasserretentionszeit der erhaltenen Alkalihumat- und/oder Ammoniumhumat-haltigen Zusammensetzungen im Vergleich zu einer chloridfreien Zusammensetzung signifikant erhöht; siehe hierzu die beiliegenden experimentellen Daten in Beispiel 2 unten. Die im Zusammenhang mit der Erfindung festgestellte erhöhte thermische Stabilität verbunden mit einer guten Wasserspeicherleistung und einer hervorragenden Wasserretention ist wie eingangs erwähnt von großer wirtschaftlicher Bedeutung. Die vorliegende Erfindung trägt damit zur Werterhöhung des Bodens, zur Erschließung und Vitalisierung arider Böden, und Gesunderhaltung von landwirtschaftlich kultivierten Pflanzen bei. Es wurde zudem festgestellt, dass eine erfindungsgemäße Alkalihumat- und/oder Ammoniumhumat-haltige Zusammensetzung einen höheren Biomassenertrag und somit eine höhere Biostimulanzwirkung als marktübliche Kaliumhumat- und Huminsäureprodukte aufweist (siehe Beispiel 3 unten).

Ein weiterer großer Vorteil des erfindungsgemäßen Verfahrens liegt darin, dass Huminsäure-haltige Zusammensetzungen, die mittels hydrothermaler Karbonisierung (HTC) aus nachwachsenden cellulose- und hemicellulosehaltigen Rohmaterialien synthetisiert worden sind, verwendet werden und somit auf Produkte aus dem Leonardit der Braunkohle oder aus Steinkohle verzichtet wird.

Als Ausgangsprodukt für die hierin beschriebenen Herstellungsverfahren wird eine Huminsäure-haltige Zusammensetzung, die mittels hydrothermaler Karbonisierung (HTC) aus nachwachsenden cellulose- und hemicellulosehaltigen Rohmaterialien synthetisiert worden ist, verwendet. Das HTC-Verfahren stellt, wie eingangs erwähnt, ein etabliertes Verfahren zur Herstellung von Huminstoff- bzw. Huminsäure-haltigen Produkten aus Biomasse dar und ist in der Fachwelt hinlänglich bekannt. Mittels des HTC-Verfahrens aus nachwachsenden cellulose- und hemicellulosehaltigen Rohmaterialien hergestellte Huminsäure-haltige Zusammensetzungen sind im Handel erhältlich (z.B. HUMIVERSE^{®} vonTerra Optima, Schweiz). Für die in dieser Offenbarung beschriebenen erfindungsgemäßen Verfahren hat sich das Produkt HUMIVERSE^{®} der Firma Terra Optima, Schweiz, als Huminsäure-haltige Zusammensetzung gut bewährt. Das pulverförmige Huminsäure-haltige Produkt HUMIVERSE^{®} wird mittels HTC-Verfahren aus Holz (Hart- oder Weichholz) gewonnen und weist einen Feststoffanteil von 67 Gew.% bezogen auf die Gesamtmasse der Huminsäure-haltigen Zusammensetzung und eine Restfeuchte von 33 Gew. % bezogen auf die Gesamtmasse der Huminsäure-haltigen Zusammensetzung auf, wobei der Feststoffanteil und die Restfeuchte in Summe 100 Gew. % ergeben, und wobei der Feststoffanteil in etwa 90 Gew. % an Huminsäuren bezogen auf den Feststoffanteil enthält. Einer Fachperson wird jedoch klar sein, dass auch jede andere Huminsäure-haltige Zusammensetzung, die die hierin definierten Eigenschaften aufweist, für die Durchführung der Erfindung geeignet ist.

Bei einer vorteilhaften Ausführungsform umfasst das Verfahren zur Herstellung der Alkalihumat- und/oder Ammoniumhumat-haltigen Zusammensetzung die folgenden hintereinander ablaufenden Schritte A) bis D):
Schritt A) Bereitstellen der (i) Huminsäure-haltigen Zusammensetzung, die mittels hydrothermaler Karbonisierung (HTC) aus nachwachsenden cellulose- und hemicellulosehaltigen Rohmaterialien synthetisiert worden ist,
Schritt B) Herstellen der Reaktionsmasse, enthaltend:
   (i) 1- 30 Gew.-%, vorzugsweise 18 - 22 Gew.%, am meisten bevorzugt 20 Gew.%, der Huminsäure-haltigen Zusammensetzung aus Schritt A)
   (ii) 61,25 - 98 Gew.% Wasser,
   (iii) 0,3 - 8,5 Gew.% KOH, vorzugsweise 50%ige KOH, und
   (vi) 0,01 - 0,25 Gew.% des zumindest einen Alkali- und/oder Ammoniumsalzes der Chlorwasserstoffsäure, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt;
Schritt C) Umsetzen der in der Huminsäure-haltigen Zusammensetzung enthaltenen Huminsäuren zu Alkalihumaten und/oder Ammoniumhumaten, indem die Reaktionsmasse bei einer Temperatur von 15°C - 85°C, vorzugsweise 20°C - 25°C, über eine Dauer von zumindest 60 min und bis zum Erhalt eines stabilen pH-Werts im Bereich von 9,0 bis 11,0, vorzugsweise eines stabilen pH-Werts von etwa 10,6, gerührt wird, wodurch ein Flüssigprodukt der Alkalihumat- und/oder Ammoniumhumat-haltigen Zusammensetzung erhalten wird; In Schritt C) wird ein Flüssigprodukt der Alkalihumat- und/oder Ammoniumhumat-haltigen Zusammensetzung in Form einer klaren braunen Lösung ohne Feststoffanteile erhalten, wobei ein Klarheitstest beispielsweise im Durchlicht-Messverfahren durchgeführt werden kann.
Schritt D) optional Unterwerfen des in Schritt C) erhaltenen Flüssigprodukts der Alkalihumat- und/oder Ammoniumhumat-haltigen Zusammensetzung einem Trocknungsschritt, wodurch ein Trockenprodukt der Alkalihumat- und/oder Ammoniumhumat-haltigen Zusammensetzung erhalten wird.

Bei einer Weiterbildung des Verfahrens wird zum Erhalt eines Trockenprodukts der Alkalihumat- und/oder Ammoniumhumat-haltigen Zusammensetzung das in Schritt C) erhaltene Flüssigprodukt der Alkalihumat- und/oder Ammoniumhumat-haltigen Zusammensetzung einem Trocknungsschritt unterworfen (Schritt D)). Der Trocknungsschritt kann beispielsweise mittels Sprühtrocknung, Walzentrockung oder Dünnschichtverdampfung erfolgen, wobei das in Schritt D) erhaltene Trocknungsprodukt der Alkalihumat- und/oder Ammoniumhumat-haltigen Zusammensetzung vorzugsweise eine Restfeuchte von 5 -15 Gew.% bezogen auf die Gesamtmasse der Alkalihumat- und/oder Ammoniumhumat-haltigen Zusammensetzung aufweist. Durch die Trocknung des Flüssigprodukts zu einem Trockenprodukt wird ein für den Transport und die Lagerung platz- und kostensparendes Produkt bereitgestellt, das nach an sich bekannter Art gegebenenfalls bedarfs- und anwendungsgerecht durch den Anwender in Wasser gelöst und verdünnt werden kann. Zweckmäßigerweise sind Huminsäure bzw. Humat-hältige Trockenprodukte wie die hierin beschriebene Alkalihumat- und/oder Ammoniumhumat-haltigen Zusammensetzung für große Transportwege nahezu unerlässlich; ebenso sind derartige Trockenprodukt für die Herstellung von Düngemittelmischungen erforderlich.

Vorzugsweise wird im erfindungsgemäßen Verfahren eine Huminsäure-haltige Zusammensetzung bereitgestellt, die einen Feststoffanteil von 60 -100 Gew.% bezogen auf die Gesamtmasse der Huminsäure-haltigen Zusammensetzung und eine Restfeuchte von 0 - 40 Gew. % bezogen auf die Gesamtmasse der Huminsäure-haltigen Zusammensetzung aufweist, wobei der Feststoffanteil und die Restfeuchte in Summe 100 Gew.% ergeben, und wobei der Feststoffanteil 80 -100 Gew. % an Huminsäuren bezogen auf den Feststoffanteil enthält. Beträgt der Feststoffanteil an Huminsäuren bezogen auf den Feststoffanteil weniger als 100 Gew.%, so kann der restliche Anteil des Feststoffanteils aus Fulvinsäure gebildet sein. Hierfür hat sich das Produkt HUMIVERSE^{®} der Firma Terra Optima, Schweiz, als Huminsäure-haltige Zusammensetzung als sehr gut geeignet herausgestellt. Einer Fachperson wird jedoch klar sein, dass auch jede andere Huminsäure-haltige Zusammensetzung, die die hierin definierten Eigenschaften aufweist, für die Durchführung der Erfindung geeignet ist.

Die Aufgabe der Erfindung wird ferner mit einer zweiten alternativen Variante des erfindungsgemäßen Verfahrens zur Herstellung einer Alkalihumat- und/oder Ammoniumhumat-haltigen Zusammensetzung gelöst, welches durch die folgenden hintereinander ablaufenden Schritte gekennzeichnet ist:
Schritt A1) Bereitstellen einer Huminsäure-haltige Zusammensetzung, die mittels hydrothermaler Karbonisierung (HTC) aus nachwachsenden cellulose- und hemicellulosehaltigen Rohmaterialien synthetisiert worden ist, wobei die Huminsäure-haltige Zusammensetzung einen Feststoffanteil von 60 -100 Gew.% bezogen auf die Gesamtmasse der Huminsäure-haltigen Zusammensetzung und eine Restfeuchte von 0 - 40 Gew. % bezogen auf die Gesamtmasse der Huminsäure-haltigen Zusammensetzung aufweist, wobei der Feststoffanteil und die Restfeuchte in Summe 100 Gew.% ergeben, und wobei der Feststoffanteil 80 -100 Gew. % an Huminsäuren bezogen auf den Feststoffanteil enthält.
Schritt B1) Herstellen einer Reaktionsmasse, enthaltend:
   (i) 39,551 - 43,716 Gew.-% der Huminsäure-haltigen Zusammensetzung aus Schritt A)
   (ii) 49,075 - 54,689 Gew.% Wasser,
   (iii) 5,512 - 6,092 Gew.% KOH, vorzugsweise 50%ige KOH, und
   (vi) 0,248 - 1,117 Gew.% des zumindest einen Alkali- und/oder Ammoniumsalzes der Chlorwasserstoffsäure, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt;
Schritt C1) Umsetzen der in der Huminsäure-haltigen Zusammensetzung enthaltenen Huminsäuren zu Alkalihumaten und/oder Ammoniumhumaten in einem Extrusionsvorgang, in welchem die Reaktionsmasse einer Extrusionsvorrichtung zugeführt und bei einer Temperatur von 50 - 120°C homogenisiert und, vorzugsweise bei einem Druck von 0 - 180 bar, extrudiert wird, wobei beim Homogenisieren in der Extrusionsvorrichtung vorzugsweise eine Temperaturrampe von 50°C auf 120°C gefahren wird, und wobei durch den Extrusionsvorgang ein extrudiertes Trockenprodukt der Alkalihumat- und/oder Ammoniumhumat-haltigen Zusammensetzung erhalten wird und das erhaltene extrudierte Trockenprodukt vorzugsweise eine Restfeuchte von 5 -15% aufweist.

In dieser alternativen zweiten Variante des Verfahrens gemäß der Erfindung wird mittels eines Extrusionsvorgangs am Ende ein Trockenprodukt erhalten. Das der Erfindung zugrunde liegende Merkmal zur Lösung der gestellten technischen Aufgabe, nämlich der Zusatz von Chlorid in der hierin definierten Konzentration bei der Herstellung von Alkalihumat- und/oder Ammoniumhumat-haltigen Zusammensetzungen, ist im Einklang mit der oben beschriebenen ersten Variante des Verfahrens. Durch den Zusatz von Chlorid werden auch bei dem mittels der zweiten Variante des Verfahrens die oben genannten vorteilhaften technischen Effekte der vorliegenden Erfindung erhalten, insbesondere wird eine thermische Instabilität des Alkali- und/oder Ammoniumhumats kompensiert und die Wasserspeicherkapazität der erhaltenen Alkalihumat- und/oder Ammoniumhumat-haltigen Zusammensetzungen wird signifikant erhöht. Da in Schritt C1) durch den Extrusionsvorgang unmittelbar ein Trockenprodukt der Alkalihumat- und/oder Ammoniumhumat-haltigen Zusammensetzung erhalten wird, soll die in Schritt B1) hergestellte Reaktionsmasse eine Restfeuchte von maximal 20% Gew.-% bezogen auf die Gesamtmasse der Reaktionsmasse aufweisen.

Vorzugsweise wird eine Huminsäure-haltige Zusammensetzung bereitgestellt, die mittels hydrothermaler Karbonisierung (HTC) aus nachwachsenden cellulose- und hemicellulosehaltigen Rohmaterialien, die aus der Gruppe bestehend aus: Holz, landwirtschaftlichen Abfällen wie beispielsweise Stroh, Maisstengel, Hanfstengel, Schilf und Abfälle aus Baumwollpflanzen, pflanzliche Biomassen, und Kombinationen daraus ausgewählt sind, synthetisiert worden ist. Vorzugsweise handelt es sich bei dem Holz um schnellwachsende Hölzer, wie beispielsweise Blauglockenbaum, Weiden, Pappel und Bambus. Vorzugsweise handelt es sich bei dem Holz um Holz aus holzwirtschaftlichen Abfällen.

Besonders bevorzugt wird eine Huminsäure-haltige Zusammensetzung bereitgestellt, die mittels hydrothermaler Karbonisierung (HTC) aus Holz synthetisiert worden ist. Vorzugsweise handelt es sich bei dem Holz um schnellwachsende Hölzer wie beispielsweise Blauglockenbaumholz, Pappel- und Weidenholz. Bei bestimmten vorteilhaften Ausführungsformen handelt es sich bei dem Holz um Holz aus holzwirtschaftlichen Abfällen.

Vorzugsweise ist das zumindest eine Alkali- und/oder Ammoniumsalz der Chlorwasserstoffsäure aus der Gruppe bestehend aus KCl, NaCl und NH₄Cl sowie deren Mischungen, vorzugsweise KCl, ausgewählt.

Besonders bevorzugt wird in den hierin geoffenbarten erfindungsgemäßen Verfahren als Alkalisalz der Chlorwasserstoffsäure KCl verwendet wird.

In einem weiteren Aspekt betrifft die vorliegende Erfindung ein Flüssigprodukt einer Alkalihumat- und/oder Ammoniumhumat-haltigen Zusammensetzung, welches nach einem erfindungsgemäßen Verfahren wie hierin geoffenbart hergestellt ist.

In einem weiteren Aspekt betrifft die vorliegende Erfindung ein Trockenprodukt einer Alkalihumat- und/oder Ammoniumhumat-haltigen Zusammensetzung, welches nach einem erfindungsgemäßen Verfahren wie hierin geoffenbart hergestellt ist.

Das Flüssigprodukt kann gegebenenfalls mit Wasser nach an sich bekannter Art bedarfs- und anwendungsgerecht durch den Anwender auf eine gewünschte Anwendungskonzentration verdünnt werden. Das Trockenprodukt kann nach an sich bekannter Art bedarfs- und anwendungsgerecht durch den Anwender in Wasser gelöst (wodurch wiederum ein Flüssigprodukt erhalten wird) und auf eine gewünschte Anwendungskonzentration verdünnt werden. Bezüglich der auf den Boden aufzubringenden bzw. in den Boden einzubringenden Konzentration oder Menge der hierin beschriebenen erfindungsgemäßen Alkalihumat- und/oder Ammoniumhumat-haltigen Zusammensetzungen liegt es im Ermessen und Können des Anwenders, z.B. eines Landwirts mit Kenntnissen in der Anwendung von Huminsäure-basierten Produkten, eine auf die zu kultivierende(n) Pflanze(n) und die vorherrschenden Boden- und Klimaverhältnisse angepasste Konzentration oder Menge pro Flächeneinheit auf den Boden aufzubringen bzw. in den Boden einzubringen und bedarfs- und anwendungsgerechte Verdünnungsverhältnisse zu wählen.

In einem weiteren Aspekt betrifft die vorliegende Erfindung ein Pflanzen-Biostimulans, enthaltend ein Flüssigprodukt gemäß der Erfindung oder ein Trockenprodukt gemäß der Erfindung. Vorzugsweise liegt das Pflanzen-Biostimulans in Form eines Flüssigprodukts vor. Unter dem Begriff "Pflanzen-Biostimulans" wie hierin verwendet ist folgendes zu verstehen: Pflanzen-Biostimulanzien stimulieren natürlich ablaufende Prozesse in der Pflanze. Sie fördern physiologische Vorgänge wie die Nährstoffaufnahme und wirken sich daher positiv auf die Wuchsleistung aus. Darüber hinaus bewirken Pflanzen-Biostimulanzien eine verbesserte Vitalisierung und Stärkung der Widerstandskraft der Pflanzen gegen abiotischen Stress. Die Biostimulanzwirkung der Pflanzen-Biostimulanzien der vorliegenden Erfindung wurde anhand einer verstärkten Wuchsleistung nachgewiesen; siehe Beispiel 3 weiter unten.

In einem weiteren Aspekt betrifft die vorliegende Erfindung einen Bodenhilfsstoff, enthaltend ein Flüssigprodukt gemäß der Erfindung oder ein Trockenprodukt gemäß der Erfindung. Vorzugsweise liegt der Bodenhilfsstoff in Form eines Trockenprodukts vor. Unter dem Begriff "Bodenhilfsstoff" wie hierin verwendet ist folgende Eigenschaften zu verstehen: Die primäre Aufgabe von Bodenhilfsstoffen liegt darin, die physikalische Eigenschaft der Wasser- und Nährstoffspeicherung, aber auch die symbiotische Stickstoffbindung positiv zu beeinflussen. Die Wasserspeicherung ist einerseits in der Wasserretention (Sickerverzögerung in Stunden) und andererseits in der dauerhaften Wasserbindung in Prozent definiert. Beide Parameter werden über die Zeit verändert und diese Veränderung gilt als Maßstab für die Wertigkeit einer Huminsäure. Als Kenngrößen und Maßstab für die Nährstoffspeicherung gelten die Kationenaustauschkapazität einerseits und die Wasserretention und Wasserspeicherung andererseits. Die Wirkungen und Vorteile einer Alkalihumat- und/oder Ammoniumhumat-haltigen Zusammensetzung gemäß der Erfindung in Bezug auf die oben genannten Parameter und damit ihre Nützlichkeit als Bodenhilfsstoff ist in den Beispielen weiter unten nachgewiesen (Wasserretention und Speicherung - siehe Beispiel 2).

In einem weiteren Aspekt betrifft die vorliegende Erfindung ein Düngemittel, enthaltend:
- Dünger ausgewählt aus der Gruppe bestehend aus: organischen Dünger, flüssigen mineralischen Dünger, festen mineralischen Dünger, und Kombinationen daraus, und
- ein Flüssigprodukt gemäß der Erfindung, ein Trockenprodukt gemäß der Erfindung, ein Pflanzen-Biostimulans gemäß der Erfindung oder einen Bodenhilfsstoff gemäß der Erfindung.

Vorzugsweise enthält das Düngemittel 0,5 - 5,0 Gew.% an Alkalihumat- und/oder Ammoniumhumat bezogen auf die Gesamtmasse des Düngemittels.

In der vorliegenden Erfindung können alle organischen Dünger mit einem Stickstoff-Gehalt von > 4% zum Einsatz kommen, insbesondere solche wie BioAgenasol^{®} (Agrana, Österreich, www.agrana.com) und Biosol (Sandoz, Österreich, www.biosol.com). Diese zeichnen sich dadurch aus, dass der Stickstoff sehr schnell mineralisiert wird. Der Gehalt an organischen Substanzen liegt bei >70% und das Ausgangsmaterial für diese organischen Dünger besteht aus Pilz-, Hefe- und Bakterienbiomassen.

Von den Mineraldüngern ist Harnstoff eine bevorzugte Mischkomponente. Die Zumischraten der erfindungsgemäßen Alkalihumat- und/oder Ammoniumhumat-haltigen Zusammensetzung in Form eines Trockenprodukts, Flüssigprodukts, Pflanzen-Biostimulans oder Bodenhilfsstoffs in einem Mineraldünger können vorzugsweise 1,0 - 5,0 Gew. % betragen. Vorzugsweise enthält der Mineraldünger daher 1,0 - 5,0 Gew.% an Alkalihumat- und/oder Ammoniumhumat bezogen auf die Gesamtmasse des Mineraldüngers.

Von den genannten organischen Düngern können Suspensionen hergestellt werden und die genannten Mineraldünger können als vollständige Lösung bereitgestellt werden. Der Anteil der erfindungsgemäßen Alkalihumat- und/oder Ammoniumhumat-haltigen Zusammensetzung wird vorzugseweise entsprechend den Trockenproduktverhältnissen berechnet.

In einem weiteren Aspekt betrifft die vorliegende Erfindung die Verwendung eines Flüssigprodukts gemäß der Erfindung oder eines Trockenprodukts gemäß der Erfindung als Pflanzen-Biostimulans, als Bodenhilfsstoff, als Düngemitteladditiv, oder als Trägermaterial für Spurenelemente, Pflanzenschutzmittel und/oder mikrobielle Biostimulanzien.

Neben den oben beschriebenen Anwendungen als Pflanzenbiostimulans und Bodenhilfsstoffs, ist die Erfindung noch bei weiteren Anwendungen nützlich. Die erfindungsgemäße Alkalihumat- und/oder Ammoniumhumat-haltige Zusammensetzung verlängert die Retentionszeit, verbessert die Speicherleistung und verringert die Auswasch- und Ausgasverluste (Ammoniak und Lachgas) der Düngerwirkung. Dadurch ergibt sich eine Steigerung der Düngerwirkung um ca. 20% wie am Beispiel des unten beschriebenen Rasenversuchs (siehe Beispiel 3) gezeigt wird. Auch bei essenziellen Spurenelementen wie Eisen zeigt sich, dass die hierin geoffenbarten Alkalihumat- und/oder Ammoniumhumat-haltige Zusammensetzungen eine resorptionsfördernde Wirkung haben. Auch als Trägermaterial für Pflanzenschutzmittel ist die Resorptionsförderung und der Wuchsstoffeffekt für eine verstärkte Wirkung verantwortlich.

In einem weiteren Aspekt betrifft die vorliegende Erfindung eine Zusammensetzung umfassend: ein Alkalihumat und/oder ein Ammoniumhumat, vorzugsweise ein Alkalihumat, am meisten bevorzugt Kaliumhumat, einer mittels hydrothermaler Karbonisierung (HTC) aus nachwachsenden cellulose- und hemicellulosehaltigen Rohmaterialien synthetisierten Huminsäure, und Chlorid, wobei die Konzentration des Chlorids 80 mMol/kg - 360 mMol/kg bezogen auf die Gesamtmasse des in der Zusammensetzung enthaltenen Alkalihumats und/oder Ammoniumhumats, vorzugsweise Alkalihumats, am meisten bevorzugt Kaliumhumats, beträgt. Die Zusammensetzung kann eine flüssige oder eine trockene Zusammensetzung sein; wesentlich ist, dass die Konzentration des Chlorids 80 mMol/kg - 360 mMol/kg bezogen auf die Gesamtmasse des in der Zusammensetzung enthaltenen Alkalihumats und/oder Ammoniumhumats beträgt. Bevorzugt sind die nachwachsenden cellulose- und hemicellulosehaltigen Rohmaterialien aus der Gruppe bestehend aus Holz, vorzugsweise schnellwachsende Hölzer, landwirtschaftlichen Abfällen wie beispielsweise Stroh, Maisstengel, Hanfstengel, Schilf und Abfälle aus Baumwollpflanzen, und Kombinationen daraus ausgewählt. Vorzugsweise ist das nachwachsende cellulose- und hemicellulosehaltige Rohmaterial Holz, mehr bevorzugt schnellwachsende Hölzer. Die Zusammensetzung findet Verwendung als Pflanzen-Biostimulans, als Bodenhilfsstoff, als Düngemitteladditiv, oder als Trägermaterial für Spurenelemente, Pflanzenschutzmittel und/oder mikrobielle Biostimulantien; siehe hierzu die Beschreibung der Verwendungen in dieser Offenbarung.

Die Erfindung und ihre Vorteile werden nachstehend anhand der folgenden nicht einschränkenden Beispiele näher erläutert.

### Beispiel 1: Herstellung erfindungsgemäßer Kaliumhumat-Trockenprodukte nach einem erfindungsgemäßen Verfahren

Für die Herstellung von erfindungsgemäßen Kaliumhumat-Trockenprodukten mit unterschiedlicher Chloridkonzentration (Trockenprodukte 1A, 1B, 1C, 1D) und einem Vergleichs-Trockenprodukt ohne Chloridzusatz wurden in einem ersten Schritt Reaktionsmassen aus den nachstehend angeführten Komponenten in den nachstehend genannten Mengen [g] bereitgestellt.

Als Huminsäure-haltige Zusammensetzung wurde HUMIVERSE^{®} (Hersteller Terra Optima, Schweiz) eingesetzt. HUMIVERSE^{®} ist eine Huminsäure welche durch ein Verfahren der hydrothermale Karbonisierung (HTC-Verfahren) aus Holz hergestellt ist. Das in Beispiel 1 zur Herstellung der Trockenprodukte 1A, 1B, 1C, 1D und 1E verwendete HUMIVERSE^{®} wies einen Feststoffgehalt von 64,7 Gew.%, wobei ca. 100% des Feststoffgehalts Huminsäure ist, sowie eine Restfeuchte von 35,3 Gew. % auf. Die Restfeuchte von HUMIVERSE^{®} wurde mittels eines Infrarottrocknungsgerätes der Marke Kern Type DLB-A bei Einwaagen von 2 bis 3g bei 120°C bestimmt.

### Reaktionsmassen

### Reaktionsmasse zur Herstellung von Trockenprodukt 1A mit 85 mM Chlorid bezogen auf die Festsubstanz (erfindungsgemäß):

| | |
|---|---|
| • 469,7g | HUMIVERSE^{®} |
| • 114,0g | KOH 50%ig |
| • 2,34g | KCL |
| • 1249,4g | Wasser |

### Reaktionsmasse zur Herstellung von Trockenprodukt 1B mit 120 mM Chlorid bezogen auf die Festsubstanz (erfindungsgemäß):

| | |
|---|---|
| • 469,7g | HUMIVERSE^{®} |
| • 114,0g | KOH 50%ig |
| • 3,30g | KCL |
| • 1249,4g | Wasser |

### Reaktionsmasse zur Herstellung von Trockenprodukt 1C mit 175 mM Chlorid bezogen auf die Festsubstanz (erfindungsgemäß):

| | |
|---|---|
| • 469,7g | HUMIVERSE^{®} |
| • 114,0g | KOH 50%ig |
| • 4,82g | KCL |
| • 1249,4g | Wasser |

### Reaktionsmasse zur Herstellung von Trockenprodukt 1D mit 353 mM Chlorid bezogen auf die Festsubstanz (erfindungsgemäß):

| | |
|---|---|
| • 469,7g | HUMIVERSE^{®} |
| • 114,0g | KOH 50%ig |
| • 9,87g | KCL |
| • 1249,4g | Wasser |

### Reaktionsmasse zur Herstellung von Trockenprodukt 1E ohne Chloridzusatz (Vergleichsprodukt, nicht erfindungsgemäß)

| | |
|---|---|
| • 469,7g | HUMIVERSE^{®} |
| • 114,0g | KOH 50%ig |
| • 0g | KCL |
| • 1249,4g | Wasser |

Durch Mischen der Komponenten wurden Reaktionsmassen mit einer Gesamtansatzmenge von ca. 1835g und mit einem Gehalt von ca. 20 Gew.% Feststoffanteil erhalten.

Die jeweiligen Reaktionsmassen wurde anschließend für 1 Stunde bei Raumtemperatur (22°C) in einem 5-Liter fassenden Reaktionsgefäß gerührt, wobei die Huminsäure zu Alkalihumat umgesetzt wurde und entsprechende erfindungsgemäße Kaliumhumat-Flüssigprodukte erhalten wurden. Das Endkriterium dieser Umsetzung war ein stabiler pH-Wert von 10,6. Weiters wurde ein Test auf Klarheit durchgeführt, indem eine Probe des jeweiligen flüssigen Reaktionsguts (Flüssigprodukt) mit Wasser im Verhältnis 1:30 oder 1:100 gemischt und im Durchlicht in einer Eprouvette mit 15 mm Durchmesser gemessen wurde, wobei das Endkriterium erreicht war, wenn die Durchlichtmessung eine klare braune Lösung zeigte.

Das jeweils erhaltene flüssige Reaktionsgut, d.h. das erfindungsgemäße Flüssigprodukt, wurde in einer Edelstahltasse (30x50cm) bei einer Flüssigkeitsschichtdicke von ca. 0,5 cm bis 1,0 cm in einem Trockenschrank Marke Haereus UT6200 bei 80°C über 24 Stunden getrocknet, wobei die erfindungsgemäßen Kaliumhumat-Trockenprodukte 1A, 1B, 1C und 1D sowie das nicht-erfindungsgemäße Kaliumhumat-Vergleichstrockenprodukt 1E erhalten wurden. Trockenauswaage: 405g mit Restfeuchte: 11%. Entsprechend einer Wiederfindung von 99%.

### Beispiel 2: Durchführung von Lysimeter-Messungen zur Bestimmung des Wasserrückhaltevermögens und der Wasserspeicherkapazität von erfindungsgemäßen chlorid-haltigen Kaliumhumat-Trockenprodukten

### 2.1 Getestete Proben:

In diesem Beispiel wurden das Wasserrückhaltevermögen (Wasserretentionszeit in [h]) und die Wasserspeicherkapazität (Wasserspeicherleistung in [%]) folgender Wirksubstanzen mittels Lysimetrie getestet:
- die gemäß obigem Beispiel 1 hergestellten erfindungsgemäßen Kaliumhumat-Trockenprodukte 1A, 1B, 1C und 1D (unterschiedliche Chloridkonzentrationen)
- das gemäß obigem Beispiel 1 hergestellte nicht erfindungsgemäße Kaliumhumat-Vergleichstrockenprodukt 1E (ohne Chlorid).

### 2.2 Durchführung des Lysimetrie- Testverfahrens:

Mit Hilfe eines Glaszylinder-Lysimeters wurden die unter 2.1 genannten Proben auf Wasserretention und Wasserspeicherung getestet.

### Lysimeter

Dimension: Höhe 21cm, Durchmesser 5,5cm, Verschlusshahn am Auslauf. Porzellanfritte mit Porosität 2. Filterpapier von der Fa. Hammermühle, Type 589/1, DP 58991 055

### Testmedium

Das Füllmaterial bestand aus der Komponente 1 (Oberlößboden, 5mm gesiebt, 24h getrocknet bei 50°C) und der Komponente 2 (Flusssand, gesiebt und getrocknet wie Komponente 1). Die Restfeuchte betrug jeweils 1-3%. Die Restfeuchtebestimmung erfolgte mit einem IR-Gerät, der max. Humusgehalt betrug 1,5%; Anteil der Schwermetalle im ökologischen Normalbereich.

Mischverhältnis: 50:50 (g/g), die Mischung erfolgte 5 Minuten in Betonmischmaschine Lagerbehälter: Plastikkübel mit luftdichtem Verschluss.

### Testproben

Es wurden die erfindungsgemäßen Proben 1A, 1B, 1C, 1D sowie die nicht erfindungsgemäß Vergleichsprobe 1E gemäß Punkt 2.1 getestet. Die jeweilige Testlösung wurde mit Leitungswasser auf 1,1g der jeweiligen Wirksubstanz je 150ml eingestellt und in das Füllmaterial gleichmäßig eingemischt.

Zusätzlich zu den genannten Wirksubstanzen wurde auch eine Wasserkontrolle parallel geführt.

### Versuchsablauf

Vom Füllmaterial wurden 349g in den Lysimeterzylinder eingefüllt und für die Testung die jeweilige Testlösung bzw. die Wasserkontrolle eingemischt. Nach Befüllung wurde der Hahn verschlossen und anschließend eine 5 Stunden Einwirkzeit beachtet.

Nach 5 Stunden wurde der Hahn geöffnet und die Abtropfzeit und das abgelaufene Flüssigkeitsvolumen gemessen (Hauptversuch, erster Aufguss). Nach ca. 24h Pause wurden 100 ml Leitungswasser aufgegeben (zweiter Aufguss) und die Abtropfzeit und das Flüssigkeitsvolumen gemessen. Die Prozedur des Aufgebens von 100 ml Leitungswasser (weitere Aufgüsse) wurde weitere zweimal wiederholt. Anschließend wurde die Summe der gemessenen Speicherleistung und Retentionszeit ermittelt.

Die Retentionszeit (in [h]) umfasste die Zeit vom Öffnen des Hahnes nach der Einwirkzeit bis zum Ende der Abtropfzeit und die Speicherleistung errechnete sich als Prozentanteil vom Aufgussvolumen.

Um Verdunstungseffekte zu unterbinden, wurde das Lysimeterrohr oben mit einer Aluminiumfolie abgedeckt.

### Bewertung der Parameter

Die Retentionszeit ist das wichtigste und am besten reproduzierbare Kriterium und gibt die Verzögerung der Wasserversickerung wieder. Die Speicherleistung stellt den Bodenwassergehalt dar, der nicht der Versickerung unterliegt, aber der Pflanze zur Verfügung steht. Davon sind aber je nach Bodentyp ca. 5-10% auch für die Pflanzen nicht zugänglich. Die Speicherleistung liefert nur im ersten Aufguss sehr gute Werte. Bei den Folgeaufgüssen zeigen nur sehr effiziente Produkte eine gute Korrelation zu den Retentionszeiten. Werden zwischen den einzelnen Aufgüssen längere, mehrere Wochen dauernde Pausen eingehalten, kommt die Verbesserung der Speicherleistung immer stärker zum Tragen.

### Vorteile des Lysimeter Testsystem im Vergleich zu herkömmlichen Testmethoden:

- Einfache Kontrolle der erforderlichen gleichmäßigen Verdichtung der Füllsubstanz (Löß-/Sandmischung).
- Der Glaszylinder erlaubt Informationen über Schicht- und Hohlraumbildungen sowie über die Höhe des Überstandes und eine optische Kontrolle des Verhaltens der Testprobe.
- Einfache Bedienung sowie gute Reproduzierbarkeit der Ergebnisse.
- Schnelle Verfügbarkeit der Resultate, sodass Entwicklungsarbeiten zügig ablaufen können.
- Mit Hilfe von Graphiken kann man sehr einfach die Methodik auf die Zuverlässigkeit der Ergebnisse überprüfen.

### 2.2 Ergebnisse des Lysimetrie-Testverfahrens

Der positive Einfluss der Chloridkonzentration auf die Thermostabilität beim Trocknen der erfindungsgemäßen Trockenprodukte 1A, 1B, 1C, 1D im Vergleich zum Vergleichstrockenprodukt 1E und der Wasserkontrolle, gemessen an der Wasserspeicherleistung (in [%]) und der Retentionszeit (in [h]) im Lysimeter ist in der folgenden Tabelle 1 wiedergegeben:

**Tabelle 1:**

| **Testprobe** | **Chloridgehalt im Trockenprodukt (mMol/kg)** | **Speicherleistung [%]** | **Retentionszeit [h]** |
|---|---|---|---|
| Vergleichstrockenprodukt 1E (nicht erfindungsgemäß) | 0 | 74 | 15 |
| Wasserkontrolle | 0 | 87 | 13 |
| Trockenprodukt 1A (erfindungsgemäß) | 85 | 132 | 72 |
| Trockenprodukt 1B (erfindungsgemäß) | 120 | 106 | 108 |
| Trockenprodukt 1C (erfindungsgemäß) | 175 | 167 | 248 |
| Trockenprodukt 1D (erfindungsgemäß) | 353 | 161 | 222 |

Die Ergebnisse des Lysimetrie-Testverfahrens zeigen für die erfindungsgemäßen Trockenprodukte (1A, 1B, 1C, 1D) signifikant höhere Retentionszeiten sowie eine signifikant höhere Speicherleistung im Vergleich zum nicht erfindungsgemäßen chloridfreien Vergleichstrockenprodukt (1E) bzw. zur Wasserkontrolle. Bei der chloridfreien Vergleichszusammensetzung (1E) verharrten Speicherleistung und Retentionszeit auf dem Niveau des Hauptversuchs und stiegen bei den Aufgüssen mit jeweils 100 ml Leitungswasser nicht mehr an, während sich die Speicherleistung und Retentionszeit bei den erfindungsgemäßen Zusammensetzungen (1A, 1B, 1C, 1D) auf einem hohen Niveau stabilisierten und von Aufguss zu Aufguss anstiegen, d.h. es konnte festgestellt werden, dass die Wirkungen hinsichtlich der Speicherleistungen und der Retentionszeit auch zeitabhängig sind.

Beispielsweise bedeuten eine Verbesserung der Wasserretentionszeit um mehr als den Faktor 10 und mehr als Verdopplung der Speicherleistung, dass damit selbst länger andauernde Dürreperioden überstanden werden können. Wenn das Sickerwasser nur langsam nach unten wandert, werden auch die enthaltenen Nährstoffe nicht oder nur in einem unwesentlichen Ausmaß ausgewaschen, was einen wesentlichen Beitrag zur Klimafitness der Böden leistet. Die Lysimetrie-Ergebnisse zeigen, dass die Zugabe von Chlorid bei der Herstellung der erfindungsgemäßen Zusammensetzungen einen positiven Effekt auf die Thermostabiliät der Zusammensetzungen hat; dies lässt sich aus der steigenden Wirkung in Abhängigkeit vom Chloridgehalt ableiten.

Mit Verweis auf das oben in Beispiel 1 beschriebene Herstellungsverfahren, zeigen die Lysimetrie-Ergebnisse, dass die damit hergestellten erfindungsgemäßen Trockenprodukte 1A, 1B, 1C und 1D, die durch die Trocknung der jeweiligen erfindungsgemäßen Flüssigprodukte erhalten wurden, im Vergleich zum chloridfreien Vergleichstrockenprodukt (1E) signifikant weniger anfällig sind, nach einer thermischen Belastung, nämlich durch den Trocknungsschritt, ihre Wirkung in Bezug auf Wasserretention und Speicherleistung einzubüßen. Es lässt sich daher feststellen, dass sowohl die erfindungsgemäßen Flüssigprodukte als auch die erfindungsgemäßen, durch Trocknung einer thermischen Belastung unterworfenen Trockenprodukte (siehe Beispiel 1; Trocknung bei 80°C über 24h), aufgrund ihres Chloridgehalts eine erhöhte thermische Stabilität gegenüber dem ohne Chloridzugabe hergestellten Vergleichstrockenprodukt (1E) aufweisen. Die hervorragende thermische Stabilität der erfindungsgemäßen Zusammensetzungen bzw. Produkte wirkt sich daher vorteilhaft auf die Lagerfähigkeit und die Transportlogistik aus, z.B. wenn die Produkte in Form von Trockenprodukten, die einem thermischen Trocknungsvorgang unterworfen werden müssen, vertrieben werden oder wenn sie in Gegenden zur Anwendung kommen, in denen die Möglichkeiten eines gekühlten Transports und einer gekühlten Lagerung beschränkt oder nicht vorhanden sind.

Somit kann aus den Lysimetrie-Ergebnissen abgeleitet werden, ohne jedoch an eine bestimmte Theorie gebunden zu sein, dass ein Zusatz von Chlorid in den hierin definierten Konzentrationen bei der Herstellung der in dieser Offenbarung beschriebenen erfindungsgemäßen Alkalihumat- und/oder Ammoniumhumat-haltigen Zusammensetzungen eine thermische Instabilität des Alkali- und/oder Ammoniumhumats kompensiert und die Wasserspeicherleistung und Wasserretentionszeit der, dank dieser Erfindung, erhaltenen Alkalihumat- und/oder Ammoniumhumat-haltigen Zusammensetzungen im Vergleich zu chloridfreien Alkalihumat- und/oder Ammoniumhumat-haltigen Zusammensetzungen signifikant erhöht.

### Beispiel 3: Nachweis der Biostimulanzwirkung eines Pflanzen-Biostimulans gemäß der Erfindung im Rahmen eines Rasenversuchs

In diesem Rasenversuch wurde die Wirkung eines erfindungsgemäßen Kaliumhumat-Flüssigprodukts als Pflanzen-Biostimulans untersucht. Parallel wurden zu Vergleichszwecken eine Kontrolle (kein Zusatz von Kaliumhumat) und drei handelsübliche Huminsäureprodukte aus Leonardit mit untersucht.

Die im Rasenversuch untersuchten Testprodukte sind im Folgenden aufgelistet:
- Erfindungsgemäßes Kaliumhumat-Flüssigprodukt ("HUMIVERSE Plus"): Trockenprodukt 1B, hergestellt gemäß Herstellungsverfahren aus Beispiel 1 oben; das Trockenprodukt 1B wurde in Wasser gelöst (20%ige Lösung) und als Flüssigprodukt verwendet.
- HUMIFIRST (nicht erfindungsgemäß): flüssige Lösung mit Kaliumhumat und Fulvosäuren aus Leonardit; Hersteller: Tradecorp, https://tradecorp.com.de
- AGRO-LIG (nicht erfindungsgemäß): Huminsäure-hältiges Produkt aus getrocknetem und zerkleinertem Leonardit; Hersteller: Minerals Technologies BioAG, www.mineralstech.com
- POWHUMUS WSG 85 ("HUMINTECH", nicht erfindungsgemäß): Kaliumhumat aus Leonardit gewonnen; Hersteller: Humintech, DE, www.humintech.com

### Kontrolle: keine Behandlung mit einem Humat- oder Huminsäureprodukt

Die Parzellengröße für den Rasenversuch betrug 1 m². Anzahl der Parzellen: 2x 1m² pro Produkt bzw. Kontrolle (2 Wiederholungen je Variante).

Die Aufwandsmenge für die oben genannten Produkte (HUMIVERSE-Plus, HUMIFIRST, AGRO-LIG, HUMINTECH) betrug jeweils 100kg Wirksubstanz/ha (= 10g Wirksubstanz/m²), wobei die Ausbringung im Mai 2022 erfolgte. Die Produkte HUMIVERSE-Plus, HUMIFIRST und HUMINTECH wurden in flüssiger Form, das Produkt AGRO-LIG in fester Form (weil unlöslich) in den Parzellen aufgebracht.

Pro m² wurden ca. 200g Rasensamen aufgebracht.

In zeitlichen Abständen (1. Schnitt: Juli 2022; 2. Schnitt August 2022; 3. Schnitt September 2022; 4. Schnitt: November 2022) wurde der Rasen geschnitten und die geerntete Biomasse wurde im frischen Zustand und getrocknet bestimmt. Die Wachstumsdauer zwischen den Schnitten betrug je nach Witterung 4-6 Wochen. Die getrockneten Biomassen wurden auf ca. 90% Trockensubstanz (TS) getrocknet.

Nach dem ersten Schnitt (Juli 2022) und dem 3. Schnitt (September 2022) erfolgte eine Düngung durch Trockenausbringung des Düngers BioAgenasol^{®} (Agrana, Österreich, www.agrana.com) auf allen Parzellen, inklusive der Kontrollparzellen, mit je 100g/m² bzw. 1t/ha. BioAgenasol^{®} enthält ca. 6% Stickstoff.

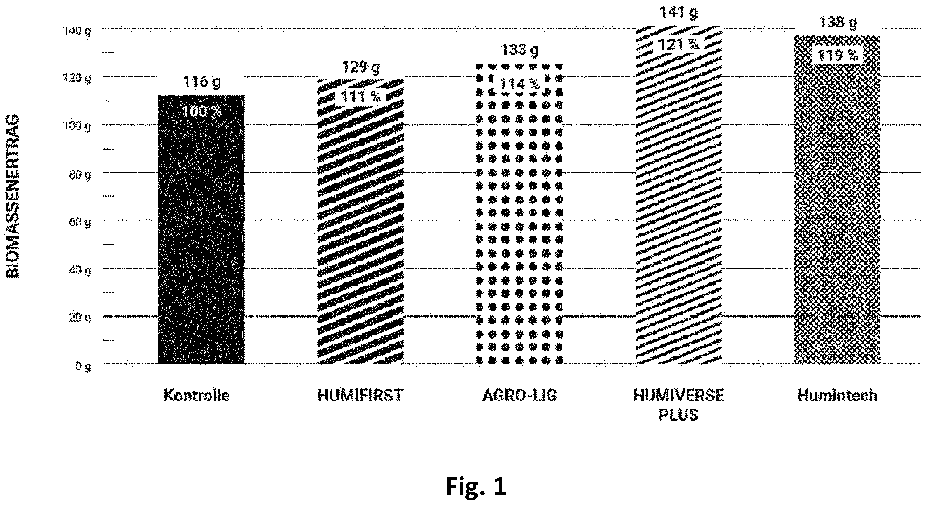

Die Ergebnisse des Rasenversuchs (4. Schnitt; November 2022), sind in Fig. 1 dargestellt.

Zusammengefasst zeigte sich die Biostimulanswirkung des erfindungsgemäßen und auf nachwachsenden Rohstoffen basierten Kaliumhumat-Produkts HUMIVERSE-Plus (aufgebracht als 20%iges Flüssigprodukt; durch Auflösen des Trockenprodukts in Wasser erhalten, siehe oben) in einer verstärkten Wuchsleistung im Vergleich zu den handelsüblichen und auf Leonardit basierten Produkten HUMIFIRST, HUMINTECH und AGRO-LIG und der Kontrolle, die im Rasenversuch deutlich zu erkennen war. Die Wuchsleistung spiegelt sich im Biomasseertrag wider (siehe Diagramm in Fig. 1). Das bedeutet, dass das auf nachwachsenden Rohstoffen basierte erfindungsgemäße Produkt HUMIVERSE-Plus deutlich besser als die Vergleichsprodukte HUMIFIRST und AGRO-LIG bzw. besser als das Vergleichsprodukt HUMINTECH ist, im Schnitt die Wirkung des Düngers um 21% erhöht, und somit eine ausgeprägte Nachhaltigkeit aufweist.

## Patentansprüche

1. Verfahren zur Herstellung einer Alkalihumat- und/oder Ammoniumhumat-haltigen Zusammensetzung, welches **dadurch gekennzeichnet ist, dass** eine Reaktionsmasse umfassend:
(i) eine Huminsäure-haltige Zusammensetzung, die mittels hydrothermaler Karbonisierung (HTC) aus nachwachsenden cellulose- und hemicellulosehaltigen Rohmaterialien synthetisiert worden ist,
(ii) Wasser,
(iii) KOH, NaOH, und/oder NH₄OH
(vi) zumindest ein Alkali- und/oder Ammoniumsalz der Chlorwasserstoffsäure
bereitgestellt wird, wobei zum Erhalt eines Flüssigprodukts der Alkalihumat- und/oder Ammoniumhumat-haltigen Zusammensetzung die in der Huminsäure-haltigen Zusammensetzung enthaltenen Huminsäuren in der Reaktionsmasse zu Alkalihumaten - und/oder Ammoniumhumaten umgesetzt werden, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt, und
wobei optional zum Erhalt eines Trockenprodukts der Alkalihumat- und/oder Ammoniumhumat-haltigen Zusammensetzung das erhaltene Flüssigprodukt der Alkalihumat- und/oder Ammoniumhumat-haltigen Zusammensetzung einem Trocknungsschritt unterworfen wird.

2. Verfahren nach Anspruch 1, welches durch die folgenden hintereinander ablaufenden Schritte gekennzeichnet ist:
Schritt A) Bereitstellen der (i) Huminsäure-haltigen Zusammensetzung, die mittels hydrothermaler Karbonisierung (HTC) aus nachwachsenden cellulose- und hemicellulosehaltigen Rohmaterialien synthetisiert worden ist,
Schritt B) Herstellen der Reaktionsmasse, enthaltend:
(i) 1- 30 Gew.-%, vorzugsweise 18 - 22 Gew.%, am meisten bevorzugt 20 Gew.%, der Huminsäure-haltigen Zusammensetzung aus Schritt A)
(ii) 61,25 - 98 Gew.% Wasser,
(iii) 0,3 - 8,5 Gew.% KOH, vorzugsweise 50%ige KOH, und
(vi) 0,01 - 0,25 Gew.% des zumindest einen Alkali- und/oder Ammoniumsalzes der Chlorwasserstoffsäure, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt;
Schritt C) Umsetzen der in der Huminsäure-haltigen Zusammensetzung enthaltenen Huminsäuren zu Alkalihumaten und/oder Ammoniumhumaten, indem die Reaktionsmasse bei einer Temperatur von 15°C - 85°C, vorzugsweise 20°C - 25°C, über eine Dauer von zumindest 60 min und bis zum Erhalt eines stabilen pH-Werts im Bereich von 9,0 bis 11,0, vorzugsweise eines stabilen pH-Werts von etwa 10,6, gerührt wird, wodurch ein Flüssigprodukt der Alkalihumat- und/oder Ammoniumhumat-haltigen Zusammensetzung erhalten wird;
Schritt D) optional Unterwerfen des in Schritt C) erhaltenen Flüssigprodukts der Alkalihumat- und/oder Ammoniumhumat-haltigen Zusammensetzung einem Trocknungsschritt, wodurch ein Trockenprodukt der Alkalihumat- und/oder Ammoniumhumat-haltigen Zusammensetzung erhalten wird.

3. Verfahren nach Anspruch 1 oder 2, **dadurch gekennzeichnet, dass** in Schritt D) zum Erhalt eines Trockenprodukts der Alkalihumat- und/oder Ammoniumhumat-haltigen Zusammensetzung das Flüssigprodukt der Alkalihumat- und/oder Ammoniumhumat-haltigen Zusammensetzung einem Trocknungsschritt unterworfen wird.

4. Verfahren nach einem der Ansprüche 1 bis 3, **dadurch gekennzeichnet, dass** eine Huminsäure-haltige Zusammensetzung bereitgestellt wird, die einen Feststoffanteil von 60 - 100 Gew. % bezogen auf die Gesamtmasse der Huminsäure-haltigen Zusammensetzung und eine Restfeuchte von 0 - 40 Gew.% bezogen auf die Gesamtmasse der Huminsäure-haltigen Zusammensetzung aufweist, wobei der Feststoffanteil und die Restfeuchte in Summe 100 Gew.% ergeben, und wobei der Feststoffanteil 80 -100 Gew.% an Huminsäuren bezogen auf den Feststoffanteil enthält.

5. Verfahren zur Herstellung einer Alkalihumat- und/oder Ammoniumhumat-haltigen Zusammensetzung, welches durch die folgenden hintereinander ablaufenden Schritte gekennzeichnet ist:
Schritt A1) Bereitstellen einer Huminsäure-haltige Zusammensetzung, die mittels hydrothermaler Karbonisierung (HTC) aus nachwachsenden cellulose- und hemicellulosehaltigen Rohmaterialien synthetisiert worden ist, wobei die Huminsäure-haltige Zusammensetzung einen Feststoffanteil von 60 -100 Gew.% bezogen auf die Gesamtmasse der Huminsäure-haltigen Zusammensetzung und eine Restfeuchte von 0 - 40 Gew. % bezogen auf die Gesamtmasse der Huminsäure-haltigen Zusammensetzung aufweist, wobei der Feststoffanteil und die Restfeuchte in Summe 100 Gew. % ergeben, und wobei der Feststoffanteil 80 -100 Gew. % an Huminsäuren bezogen auf den Feststoffanteil enthält.
Schritt B1) Herstellen einer Reaktionsmasse, enthaltend:
(i) 39,551 - 43,716 Gew.-% der Huminsäure-haltigen Zusammensetzung aus Schritt A)
(ii) 49,075 - 54,689 Gew.% Wasser,
(iii) 5,512 - 6,092 Gew.% KOH, vorzugsweise 50%ige KOH, und
(vi) 0,248 - 1,117 Gew.% des zumindest einen Alkali- und/oder Ammoniumsalzes der Chlorwasserstoffsäure, wobei die Konzentration des Chlorids in der Reaktionsmasse 80 mMol/kg - 360 mMol/kg bezogen auf die Gesamtmasse der in der Huminsäure-haltigen Zusammensetzung enthaltenen Huminsäuren beträgt;
Schritt C1) Umsetzen der in der Huminsäure-haltigen Zusammensetzung enthaltenen Huminsäuren zu Alkalihumaten und/oder Ammoniumhumaten in einem Extrusionsvorgang, in welchem die Reaktionsmasse einer Extrusionsvorrichtung zugeführt und bei einer Temperatur von 50 - 120°C homogenisiert und, vorzugsweise bei einem Druck von 0 - 180 bar, extrudiert wird, wobei beim Homogenisieren in der Extrusionsvorrichtung vorzugsweise eine Temperaturrampe von 50°C auf 120°C gefahren wird, und wobei durch den Extrusionsvorgang ein extrudiertes Trockenprodukt der Alkalihumat- und/oder Ammoniumhumat-haltigen Zusammensetzung erhalten wird und das erhaltene extrudierte Trockenprodukt vorzugsweise eine Restfeuchte von 5 -15% aufweist.

6. Verfahren nach einem der Ansprüche 1 bis 5, **dadurch gekennzeichnet, dass** eine Huminsäure-haltige Zusammensetzung bereitgestellt wird, die mittels hydrothermaler Karbonisierung (HTC) aus nachwachsenden cellulose- und hemicellulosehaltigen Rohmaterialien, die aus der Gruppe bestehend aus: Holz, vorzugsweise schnellwachsende Hölzer, landwirtschaftlichen Abfällen wie beispielsweise Stroh, Maisstengel, Hanfstengel, Schilf und Abfälle aus Baumwollpflanzen, pflanzliche Biomassen, und Kombinationen daraus ausgewählt sind, synthetisiert worden ist.

7. Verfahren nach einem der Ansprüche 1 bis 6, **dadurch gekennzeichnet, dass** eine Huminsäure-haltige Zusammensetzung bereitgestellt wird, die mittels hydrothermaler Karbonisierung (HTC) aus Holz synthetisiert worden ist.

8. Verfahren nach einem der Ansprüche 1 bis 7, **dadurch gekennzeichnet, dass** das zumindest eine Alkali- und/oder Ammoniumsalz der Chlorwasserstoffsäure aus der Gruppe bestehend aus KCl, NaCl und NH₄Cl sowie deren Mischungen, vorzugsweise KCl, ausgewählt ist.

9. Verfahren nach einem der Ansprüche 1 bis 8, das in dem Verfahren als Alkalisalz der Chlorwasserstoffsäure KCl verwendet wird.

10. Flüssigprodukt einer Alkalihumat- und/oder Ammoniumhumat-haltigen Zusammensetzung, welches nach einem Verfahren gemäß einem der Ansprüche 1 bis 4 und 6 bis 9 hergestellt ist.

11. Trockenprodukt einer Alkalihumat- und/oder Ammoniumhumat-haltigen Zusammensetzung, welches nach einem Verfahren gemäß einem der Ansprüche 4 bis 9 hergestellt ist.

12. Pflanzen-Biostimulans, enthaltend ein Flüssigprodukt nach Anspruch 10 oder ein Trockenprodukt nach Anspruch 11.

13. Bodenhilfsstoff, enthaltend ein Flüssigprodukt nach Anspruch 10 oder ein Trockenprodukt nach Anspruch 11.

14. Düngemittel, enthaltend:
• Dünger ausgewählt aus der Gruppe bestehend aus: organischen Dünger, flüssigen mineralischen Dünger, festen mineralischen Dünger, und Kombinationen daraus, und
• ein Flüssigprodukt nach Anspruch 10, ein Trockenprodukt nach Anspruch 11, ein Pflanzen-Biostimulans nach Anspruch 12 oder einen Bodenhilfsstoff nach Anspruch 13.

15. Düngemittel nach Anspruch 14, **dadurch gekennzeichnet, dass** es 0,5 - 5,0 Gew.% an Alkalihumat- und/oder Ammoniumhumat bezogen auf die Gesamtmasse des Düngemittels enthält.

16. Verwendung eines Flüssigprodukts nach Anspruch 10 oder eines Trockenprodukts nach Anspruch 11 als Pflanzen-Biostimulans, als Bodenhilfsstoff, als Düngemitteladditiv, oder als Trägermaterial für Spurenelemente, Pflanzenschutzmittel und/oder mikrobielle Biostimulanzien.

17. Zusammensetzung umfassend:
ein Alkalihumat und/oder ein Ammoniumhumat, vorzugsweise ein Alkalihumat, am meisten bevorzugt Kaliumhumat, einer mittels hydrothermaler Karbonisierung (HTC) aus nachwachsenden cellulose- und hemicellulosehaltigen Rohmaterialien synthetisierten Huminsäure, und Chlorid, wobei die Konzentration des Chlorids 80 mMol/kg - 360 mMol/kg bezogen auf die Gesamtmasse des in der Zusammensetzung enthaltenen Alkalihumats und/oder Ammoniumhumats, vorzugsweise Alkalihumats, am meisten bevorzugt Kaliumhumats, beträgt.
